# NEW EUROPEAN PATENT SPECIFICATION

(11) **EP 2 588 310 B2**
(45) Date of publication and mention of the opposition decision: **08.07.2020**
(45) Mention of the grant of the patent: 31.01.2018
(21) Application number: 11733612.3
(22) Date of filing: 30.06.2011
(51) Int. Cl.: B32B 21/02, B32B 21/08, E04C 2/24, B32B 27/08

(54) **METHOD OF MANUFACTURING A PANEL COMPRISING A POLYMERIC COMPOSITE LAYER**
VERFAHREN ZUR HERSTELLUNG EINES PANEELS MIT EINER POLMERKOMPOSITSCHICHT
PROCÉDÉ DE PRODUCTION D'UN PANNEAU COMPRENANT UNE COUCHE COMPOSITE POLYMÉRIQUE

(30) Priority: 05.11.2010 EP 10190253; 30.06.2010 EP 10167988
(43) Date of publication of application: 08.05.2013
(60) Divisional application: 17208387.5
(73) Proprietor: Unilin, BVBA, 8710 Wielsbeke (BE)
(72) Inventor: VERMEULEN, Bruno Paul Louis, B-3680 Aldeneik-Maaseik (BE)
(74) Representative: Valea AB
(86) International application number: PCT/EP2011/061017
(87) International publication number: WO 2012/001109

(56) References cited:
- WO-A1-00/78541
- WO-A1-2008/103887
- WO-A1-2008/122668
- WO-A1-2010/081860
- WO-A2-2011/141849
- FR-A1- 2 542 666
- GB-A- 2 338 435
- US-A- 4 614 556
- US-A- 5 560 797
- US-A- 5 662 981
- US-A- 5 910 358
- US-A1- 2005 136 259
- US-A1- 2007 039 693
- B.E. FISHER: "Floorward Thinking", ENVIRONMENTAL HEALTH PERSPECTIVES, vol. 107, no. 7, July 1999 (1999-07), pages A362-A364, XP002606371,
- "Ionomere" In: J. Falbe & M. Regitz: "Römpp-Lexikon Chemie", 1997, Georg Thieme Verlag, Stuttgart (DE), XP002606372, ISBN: 3-13-734810-2 vol. 3, page 1979, the whole document
- "DuPont(TM) Bynel (R) - More Choices, More Options, More Answers", E.I. du Pont de Nemours and Company , 9 September 2005 (2005-09-09), XP002606373, Retrieved from the Internet: URL:http://www.dupont.com/packaging/produc ts/bynel/pdsprint/choices.html [retrieved on 2010-10-21]
- "Stratica Installation Checklist", , 23 April 2010 (2010-04-23), pages 1-2, XP55007593, Retrieved from the Internet: URL:http://www.amtico.com/uploadedFiles/Re sources/UK/Information_and_Advice/Stratica Installation Checklist.pdf [retrieved on 2011-09-20]
- JIN S H: "Panel having printed layer on surface layer of the panel and process of manufacturing the same, which forms the printed layer on the surface layer by dye sublimation transcription", WPI / THOMSON,, vol. 2007, no. 6, 19 June 2006 (2006-06-19), XP002587576,
- "Polymer Polarity", , 17 November 2009 (2009-11-17), Retrieved from the Internet: URL:http://plasticnotes.blogspot.de/2009/1 1/polymer-polarity.html [retrieved on 2016-06-30]
- M. Bühl & G. Frenking: "polar", Römpp online 4.0 , November 2008 (2008-11), Retrieved from the Internet: URL:https://roempp.thieme.de/roempp4.0/do/ data/RD-16-02937 [retrieved on 2016-06-29]
- "Dielectric Properties of Polymers", Zeus Industrial Products, Inc. , 2005, Retrieved from the Internet: URL:http://www.appstate.edu/~clementsjs/jo urnalarticles/zeus_dielectric.pdf [retrieved on 2016-06-30]

## Description

The invention relates to a method of manufacturing a laminate panel, in particular a floor panel, which comprises a polymeric composite layer and a cover layer which is laminated to the polymeric composite layer.

Such a panel is known in the art and includes WPC as a polymeric composite. WPC stands for wood plastic composite and is a composite of polymeric material and a natural fibre for example from any wood source. The polymeric material can be one or more polymers having a polyolefin group, such as polyethylene. Other polymeric materials include polypropylene, polyvinyl chloride (PVC), copolymer of PVC, or the like. In a known panel a cover layer, for example a paper sheet including a decoration pattern, is attached to the WPC layer by means of glue. In order to achieve a high fixing quality a relatively expensive glue has to be applied.

It is an object of the present invention to provide a low-cost panel comprising a polymeric composite layer and a cover layer laminated thereto by means of a manufacturing method.

In order to achieve this object the method is as defined in claim 1.

The advantage of the panel made by the method according to the invention is that a strong adherence can be achieved between the polymeric composite layer and the polymeric film, in particular in case of a polymeric composite layer that contains a non-polar polymer, without the necessity of using expensive glue. A polymeric film appears to be more compatible to a polymeric composite layer in terms of adherence than a conventional paper sheet. One of the non-polar polymers is polypropylene, for example. The polymeric film is provided with a decoration pattern, which is printed on the film. It is noted that the polymeric composite may be a mixture of one or more polymers and non-polymeric or partly polymeric material. Examples of non-polymeric or partly polymeric materials are chalk and carpet waste, jute, styrene butadiene (latex), but a lot of alternative materials are conceivable. The polymeric composite may further contain a coupling agent to improve the material cohesion. Alternative additives are elastomers or materials having a high absorption capacity of fillers. This may also improve adherence properties with the polymeric film or characteristics like UV resistance, humidity resistance and bending strength. The polymeric film may be made of a mixture of different polymers or a single polymer. Preferably, the polymer film is free of non-polymeric materials that are contained in the polymeric composite layer. In general, the polymeric composite layer may be a composite of a polymer and a non-polymer composite substance whereas the polymeric film is substantially free of this non-polymer composite substance. Nevertheless, a minor part of the polymeric film may contain a non-polymer composite substance. The polymeric composite layer and/or the polymeric film may contain a mixture of polymers. The composite substance may be natural or non-natural fibres, particles or the like.

The polymeric composite layer may be a WPC layer which is made of wood plastic composite (WPC) and the cover layer may be a non-WPC polymeric film.

The film has a thickness of less than 1500 µm and preferably less than 500 µm. Before laminating the film may be a continuous sheet. The polymeric film is thinner than the polymeric composite layer; in practice one can also speak about a polymeric composite core to which the polymeric film is laminated.

The polymeric film is made of a polymer selected from the list consisting of PVC, polyethylene, XPS (polystyrene), polypropylene, polyester and polypropylene. These materials are compatible with one or more polymers contained in several polymeric composite layer types and WPC layer types in terms of adherence. Both the polymeric composite layer and the polymeric film contain a polymer of similar type.

The polymeric film is melted to the polymeric composite layer since this appears to create an optimal adherence between the polymeric film and the polymeric composite layer. This means that at a contact area between the polymeric film and the polymeric composite layer an earlier melted portion of at least one of the polymeric film and the polymeric composite layer functions as glue. In the panel made according to the invention the earlier melted portion is cured. In this case no additional glue is necessary.

In order to create a high level of wear resistance of the panel the polymeric film is covered by an ionomer resin layer, preferable selected from the group known as Surlyn®. An ionomer resin is a polymer that comprises repeat units of both electrically neutral repeating units and a fraction of ionized units. Surlyn® is a commercial thermoplastic ionomer resin that was introduced by DuPont™ in the early 1960's. Surlyn® can be used in conventional extrusion/coextrusion, blown film, cast film, and extrusion coating equipment designed for polyethylene resins. Other characteristics of Surlyn® are sealing performance, formability, clarity, oil/grease resistance, and high hot draw strength, which makes the material quite suitable for application in the field of floor panels.

The ionomer resin layer may be a sheet which is laminated to the polymeric film by means of a tie layer between the ionomer resin layer and the polymeric film, wherein the tie layer is preferably selected from the group known as Bynel®. Bynel® is a commercial adhesive resin that has been introduced by DuPont™, as well. Alternatively, a copolymer of ethylene and methacrylic acid, for example Nucrel® of DuPont™, is also conceivable.

In the embodiments as described hereinbefore a decoration pattern such as a natural wood pattern, may be provided on the polymeric film. Alternatively, a decoration pattern is provided directly on the polymeric composite layer. In that case the polymeric film itself may be an ionomer resin film which is directly provided on the decorated polymeric composite layer or by means of a tie layer as mentioned hereinbefore.

In case of providing a decoration pattern on the polymeric film the pattern may be provided by a digitally controlled inkjet printer. Preferably, the printing process is adapted to the properties of the polymeric film. For example, the viscosity of the ink and the droplet size may be varied, or the polymeric film is prepared by a corona treatment, plasma treatment or by means of applying a primer. Alternatively, the decoration pattern may be printed in a conventional manner, for example by engraved printing, contact printing or non-contact printing.

The panel made according to the invention may be a floor panel, ceiling panel, wall panel, or the like.

According to the present invention, the polymeric composite layer is manufactured by melting a layer of granulate of polymeric composite and pressing the melted layer, wherein the polymeric composite layer is provided for placing the polymeric film on its upper face before the upper face is cooled down below its melting temperature. In this case it is not necessary to heat the polymeric composite layer again after having manufactured this, prior to placing the polymeric film on the upper face thereof.

The polymeric film may be prepared by applying a surface tension treatment, preferably a corona discharge treatment, then providing an ink pattern on the polymeric film, then applying a surface tension treatment, preferably a corona discharge treatment, then applying a tie layer and subsequently applying an ionomer layer before or after placing the polymeric film on the upper face of the polymeric composite layer. The ionomer layer may be Surlyn® as described hereinbefore. Alternative surface tension treatments include plasma treatment, pyrolysis treatment, flame pyrolysis treatment, UV treatment, ozone treatment, or the like. Between the successive steps as mentioned hereinbefore may be intermediate steps.

In a preferred embodiment a primer for promoting adhesion of olefinic resins is applied on the polymeric film before providing the ink pattern and/or before applying the ionomer layer. The primer is intended for improving the adhesion characteristics and also for enhancing the spread out and bonding of ink. In practice the primer may be applied by an amount of 0.2 g/m², for example. Preferably, the primer is an aqueous resin, for example Mica A-131-X. Mica A-131-X is a single component, acqueous resin compound designed for promoting adhesion of olefinic resins to various supporting films and papers in extrusion coating and laminating.

The application of a primer before applying a tie layer provides additional adhesion with the tie layer. An appropriate tie layer is selected from the group known as Bynel®, being developed by DuPont™, or it may be a blend of Fusabond M603 and Elvax315LG in a ratio of 40%/60% or 30%/70%, for example, but different ratios are conceivable. In general, the part of Fusabond M603 may vary between 20 and 50% in the blend.

One or more polyurethane layers may be applied on top of the ionomer layer.

The polymeric film may be prepared by a co-extrusion process resulting in a layer for laminating to the polymeric composite layer.

The polymeric film may be provided with a surface texture before or after placing the polymeric film on the upper face of the polymeric composite layer, for example by embossing.

The invention will hereafter be elucidated with reference to very schematic drawings showing embodiments of the invention by way of example.
Fig. 1 is an exploded cross-sectional view of an embodiment of the panel made according to the invention.
Fig. 2 is an illustrative view of processing steps, showing an embodiment of a method of manufacturing a panel according to the invention.
Fig. 3 is a similar view as Fig. 2 of an alternative embodiment.
Fig. 4 is a similar view as the lower part of Fig. 3 of another alternative embodiment.
Fig. 5 is a similar view as Fig. 2 of still another alternative embodiment.

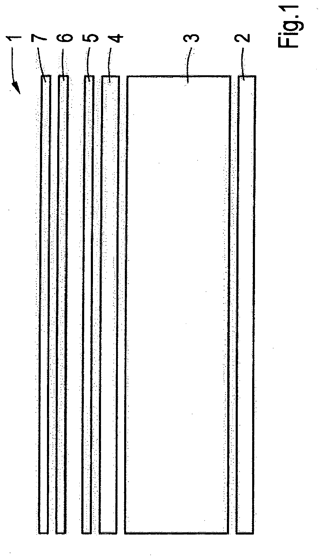

Fig. 1 shows separate layers of an embodiment of a panel 1 made according to the invention. The panel 1 is a laminate which comprises several layers. The total thickness of this embodiment of the panel 1 is about 5,5 mm, but alternative sizes are possible. From the lower side to the upper side of the panel 1 of Fig. 1 one can see a lower soft layer 2 of about 1 mm, a WPC layer or core 3 of about 3 mm, an upper soft layer 4 of about 1 mm, a non-WPC polymeric film 5 of about 250 µm, a tie layer 6 of about 50 µm and an ionomer resin layer 7 of about 200 µm. The mentioned thicknesses are just examples and alternative values are possible. It is noted that instead of WPC an alternative polymeric composite may be applied. The polymeric composite may be made of a polymer and a composite substance such as waste of carpet, chalk or the like. It is also possible, for example, that the waste of carpet itself contains one or more polymers such that the polymeric composite may be made of polymer-containing waste of carpet, possibly added with one or more additional polymers. Furthermore, a coupling agent for improved cohesion may be contained in the polymeric composite. It is also noted that the non-WPC polymeric film 5 may be replaced by a polymeric film which is substantially free of any composite substance.

The lower soft layer 2 and the upper soft layer 4 are attached at both sides of the WPC core 3 for comfort reasons in this embodiment, but the soft layers 2, 4 may be omitted. The lower and upper soft layers 2, 4 may be flexible for improvement of sound damping. Several types of soft layers 2, 4 are possible, such as foam, wood foil and the like. In the embodiment as shown in Fig. 1 the lower and upper soft layers 2, 4 are made of soft WPC.

The WPC core 3 and/or the soft WPC layers 2, 4 comprise a non-polar polymer, for example polypropylene. The non-WPC polymeric film 5 is made of polypropylene, but alternative materials are conceivable, for example PVC or polyethylene. It appears that a much stronger attachment can be realised between a non-polar WPC layer 4, in this case the upper soft WPC layer 4, and the non-WPC polymeric film 5 than between a non-polar WPC layer and a paper sheet in conventional panels including a WPC layer.

The non-WPC polymeric film 5 can be provided with a decoration pattern, for example by printing an ink pattern on the film 5.

In the embodiment of Fig. 1 the ionomer resin layer 7 forms a protective layer such as a wear-resistant top layer in conventional laminate panels. It is of course possible to apply another type of wear-resistant layer than the ionomer resin layer 7. Preferably, the ionomer resin layer 7 has a high level of transparency so as to keep a decoration pattern of the non-WPC polymeric film 5 visible. An appropriate material is selected from the group known as Surlyn® being developed by DuPont™. Additionally, the ionomer resin layer may be covered by a polyurethane coating or the like in order to improve abrasive and scratch resistance. Such a coating may have a thickness of 5 - 30 µm, but a thinner or thicker coating is conceivable. Alternatively or in addition to a polyurethane coating, the ionomer resin layer may be covered by a UV top coating or a lacquer which can be cured by an electron beam, possibly added with wear-resistant particles. Furthermore, the upper side of the panel 1 may be subjected to a plasma treatment. The plasma treatment may comprise applying a material, for example in the form of a coating or a film of metal, metal oxides, metal nitrides and mixtures thereof, such as aluminum oxide, silicon oxide, tin and/or indium oxide, titanium dioxide, zirconium dioxide, tantalum oxide, chromium oxide, aluminum nitride, boron nitride, silicon nitride, titanium nitride, and zirconium nitride.

The tie layer 6 is applied for adhering the ionomer resin layer 7 to the non-WPC polymeric film 5. An appropriate tie layer is selected from the group known as Bynel®, being developed by DuPont™, as well. Alternative materials which are suitable as tie layer, are Nucrel® 0609HSA, Elvax® 3165LG, Fusabond® M 603 of DuPont™ or blends thereof.

The panel 1 as shown in Fig. 1 can be manufactured by heating an upper face of the upper soft WPC layer 4 to a temperature which is higher than its melting temperature, then placing the non-WPC polymeric film 5 on the melted upper face and pressing the non-WPC polymeric film 5 on the WPC upper layer 4. The upper face of the WPC upper layer 4 may be heated by means of infrared radiation, but alternative heating means are conceivable. It is conceivable that the entire stack of layers 5, 6, 7 are pressed to the WPC layers 2, 3, 4 simultaneously in case the stack of layers 2, 3, 4 form already a base panel. The tie layer 6 may be applied on the non-WPC polymeric film 5 by means of a co-extrusion process. The non-WPC polymeric film 5 and the ionomer resin layer 7 may be supplied on rolls. Alternatively, the tie layer may be applied to the polymeric film 5 on which a decoration pattern is provided. It is also possible that during or after the process of providing a decoration pattern to the polymeric film a primer or adhering layer is provided on the polymeric film 5. In that case the layer of Bynel® can be omitted.

In a specific embodiment the stack of layers 5, 6, 7 is prepared by the following successive steps: providing the polymeric film 5, applying a surface tension treatment to an upper surface of the polymeric film 5, for example a corona discharge treatment, providing an ink pattern on the polymeric film 5, for example by digital printing and/or conventional printing, again applying a surface tension treatment, for example a corona discharge treatment, applying the tie layer 6, and applying the ionomer layer 7. The tie layer 6 and the ionomer layer 7 may be selected from the group known as Bynel® and Surlyn®, respectively. This process may be a co-extrusion process. The resulting film 5, 6, 7 can be attached as a single film or sheet to the soft layer 4 or to the WPC layers 2, 3, 4 in case the stack of layers 2, 3, 4 form already a base panel. Before providing the ink pattern and/or before applying the ionomer layer 7 a primer for promoting adhesion of olefinic resins may be applied on the polymeric film 5.

It is noted that alternative surface tension treatments may be applied, such as plasma treatment, pyrolysis treatment, flame pyrolysis treatment, UV treatment, ozone treatment, or the like. Furthermore, printing a pattern may be performed by contact printing or non-contact printing.

It is also possible to melt the non-WPC polymeric film 5 to the WPC upper layer 4 directly after manufacturing the WPC core 3 and the WPC lower and upper soft WPC layers 2, 4. In accordance with the invention, the WPC layers 2, 3, 4 are manufactured by melting layers of granulate of WPC and pressing the melted layers together. Such a method is described in WO 2008/122668. Before cooling down the WPC layers 2, 3, 4 below the melting temperature of at least the upper soft WPC layer 4 and possibly before pressing the WPC layers 2, 3, 4 together, the non-WPC polymeric film 5 can be placed onto the melted upper face of the WPC upper layer 4. It is noted that if the non-WPC polymeric film 5 is placed on a WPC layer which is still too hot, the film 5 may melt which is undesirable.

Nevertheless, in an alternative method of manufacturing a panel a polymeric film is melted on the polymeric composite layer deliberately. In this case a polymeric sheet, for example polypropylene, PVC, polyester or the like, can be supplied to the melted layer of granulate of the polymeric composite. The polymeric film melts and as a result after pressing the panel obtains a smooth surface at the side where the polymeric sheet is provided and melted. This is advantageous if the polymeric composite layer has a coarse surface due to inhomogeneous mixing of the polymer and a composite substance. Additionally, the melted polymeric layer on the polymeric composite layer may also improve the stability and stiffness of the resulting panel and further improve the adherence of another polymeric film thereon. It is also possible to provide a melted polymeric layer or film at the back side of the polymeric composite layer, which may function as a balancing layer. It is noted that instead of applying a polymeric sheet the polymeric material may be provided on the granulate of the polymeric composite by spraying it in a liquid phase. In case of applying a polymeric sheet it may have a specific weight of 10-500 g/m².

It is possible to use a press including an embossed press plate in order to create a panel 1 having an embossed upper surface. The laminating process may be continuous or discontinuous. Furthermore, the polymeric film 5 and/or the ionomer resin layer 7 may be embossed before laminating or upon laminating the layers 5, 7 to the polymeric composite layer. Embossing may be performed by using a textured calendar or by means of a textured press plate, or by means of a press plate on which a releasable textured press layer is present.

Furthermore, the panel 1 may be provided with locking means for attaching panels to each other so as to form a flooring, for example. Furthermore, the panel 1 may be provided on at least two and preferably all edges with locking means. Preferably, the locking means also include a mechanical locking system to lock the adjacent floor panels not only in a direction perpendicular to the surface of the panels, but also in a direction parallel to the surface and perpendicular to the respective side of the panel 1. However the invention is not limited thereto at all. All locking systems, including the use of a tongue and a groove as well as adhesives are encompassed by the invention.

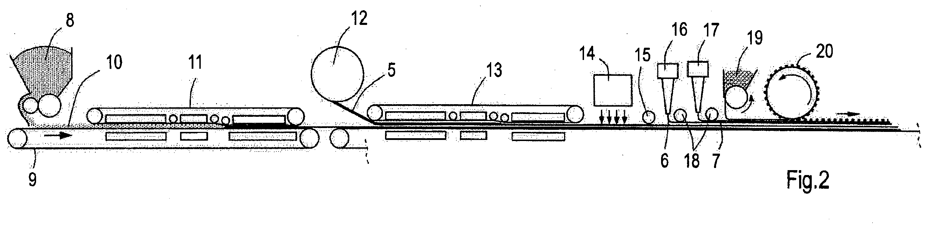

Fig. 2 illustrates an embodiment of a method of manufacturing the panel 1 according to the invention. At the left side of Fig. 2 a granulate of polymeric composite is supplied by a hopper 8 and applied onto a conveyor belt 9 such that a layer 10 of granulates of polymeric composite arises on and is transported by the conveyor belt 9. The layer 10 is transported to a double-belt press 11 where it is heated, melted and pressed. When the pressed layer 10 leaves the double-belt press 11 at least the upper surface of the layer 10 is still not cooled down below its melting temperature.

In a next stage of the process the polymeric film 5 is provided from a roll 12 and placed onto the upper surface of the pressed layer 10. Since the upper surface is in a melted or partly melted state no additional glue has to be added. The polymeric composite layer 10 including the polymeric film 5 is led through a double-belt laminator 13 where they are attached to each other under elevated pressure.

Then, a corona discharge treatment is applied by a corona discharge device 14. This surface tension treatment creates a surface of the polymeric film 5 which is suitable for receiving a primer at a primer application station 15. The primer may be an aqueous resin, for example Mica A-131-X.

In a next stage the tie layer 6 is extruded at a tie layer extrusion coater 16. This step is followed by applying the ionomer layer 7 via an ionomer layer extrusion coater 17. The resulting layer is treated by calendaring rollers 18. It is conceivable to co-extrude additional layers for creating additional characteristics, for example an anti-wear and/or anti-scratch layer, an anti-static layer, a water impermeable layer such as a PE layer of about 10 µm, possibly having different layer thicknesses. The calendaring rollers 18 may be made of Teflon or silicone.

On top of the resulting layer wear-resistant particles are scattered by a scattering device 19 at the right end of the process as illustrated in Fig. 2. The upper surface is provided with a texture by an embossing drum 20. The resulting panel may be cut into pieces and provided with locking means such as tongues and grooves.

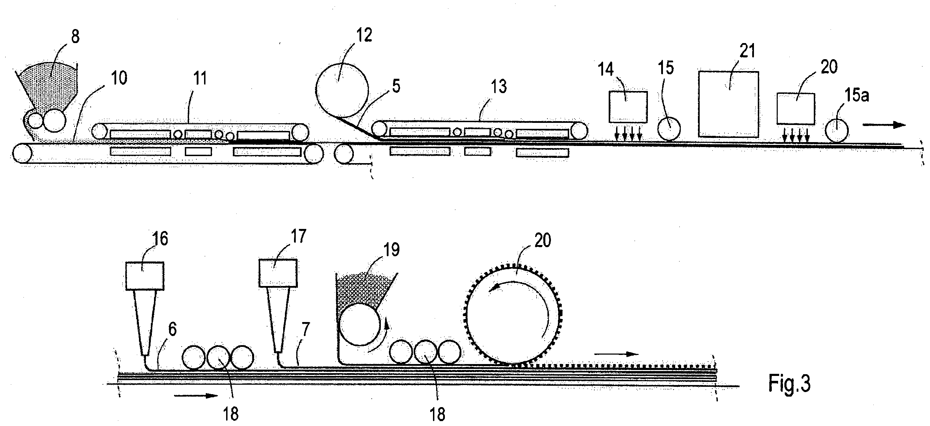

Fig. 3 illustrates another embodiment of the method which is similar to the embodiment as illustrated in Fig. 2 up to the primer application station 15. After applying the primer a decoration pattern is printed on the upper surface of the polymeric film 5 by a digital printer 21. Alternative contact printing devices, such as flexo, engraved cylinders or the like, or non-contact printing devices, such as inkjet, thöner or the like, or a combination thereof are conceivable.

After the printing step, the upper surface of the intermediate product is treated again by a second corona discharge device 22 and a second primer application station 15a. Subsequently, the tie layer 6 is extruded by the tie layer extrusion coater 16 and the ionomer layer 7 is applied by the ionomer layer extrusion coater 17. The resulting layer is also treated by the calendaring rollers 18 and provided with wear-resistant particles by the scattering device 19. The upper surface is provided with a texture by the embossing drum 20.

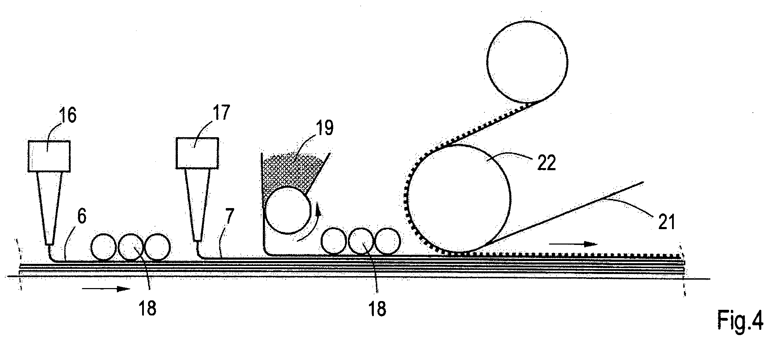

Fig. 4 illustrates an alternative step of providing the upper surface with a texture. In this case a textured release layer 21 is guided about a roller 22. The roller 22 may have a flat surface guiding the flat back-side of the release layer 21. The advantage of the textured release layer 21 is that anti-wear particles in the upper portion of the ionomer layer 7 that is embossed will mainly impact the release layer 21. This minimizes any wear of the roller 22.

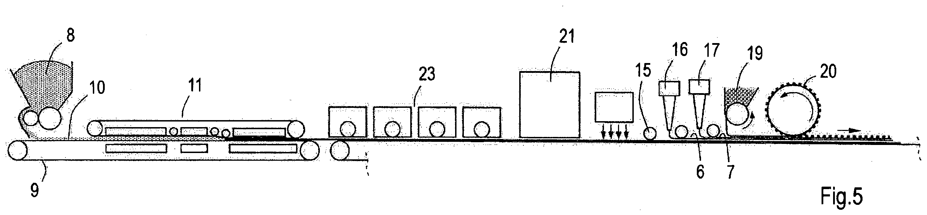

Fig. 5 illustrates still another alternative embodiment. In this case there is a printing unit 23 which comprises a filler, primer and base-coatings. The printing unit 23 applies several layers onto the pressed layer 10. The uppermost layer is suitable to print an ink pattern thereon. The uppermost layer may comprise tiny particles, for example in the size range of 20-500 µm. As a result a smooth upper surface is obtained. A suitable powder appears to be the material Abcite® of Dupont™, but alternative materials are conceivable. Abcite is derived from Surlyn. The tiny particles may be colored such that a smooth, colored surface is obtained which is ready for printing a decoration pattern thereon. It is possible that the printing unit 23 applies at least a powder layer, for example Abcite® of Dupont™, on the upper surface of the layer 10 which is still in a melted or partly melted state. This lead to a smooth surface on which a decoration pattern can be printed and which can be covered with further layers as described hereinbefore.

In order to improve the attachment of the powder layer or the polymeric layer 5 to the upper surface of the layer 10, at least an upper portion of the layer 10 may be prepared in a special manner, for example by reducing or omitting the ratio of composite substance in the layer 10. Due to a higher ratio of polymer in the upper portion of the layer 10 it is easier to melt the powder or polymeric layer 5 to the upper surface of the layer 10. In case of heating the upper surface of the layer 10 it will be more reactive to the heat source if the ratio of polymers in the upper portion of the layer 10 is increased.

The invention is not limited to the embodiments as described above and shown in the drawings, which can be varied in several ways without departing from the scope of the invention. For example, the upper soft layer may be eliminated such that the non-WPC polymeric film is attached directly to the WPC core. It is also possible that a very thin layer is present between the WPC core and the non-WPC polymeric film which is necessary to manufacture the WPC core but which has a thickness such that it does not adversely affect a strong adherence between the WPC core and the non-WPC polymeric film. It is noted that the panel made according to the invention may be flexible or stiff or between that. Similarly, the method according to the invention may lead to such a panel.

## Claims

1. Method of manufacturing a laminate panel, including the steps of:
providing a polymeric composite layer (4, 10) and having an upper face which has a temperature above its melting temperature,
providing a polymeric film (5) having a thickness of less than 1500 µm,
wherein the polymeric film is made of a polymer selected from the list consisting of PVC, polyethylene, XPS (polystyrene), polypropylene, polyester and polypropylene,
placing the polymeric film (5) on the upper face of the polymeric composite layer (4, 10), and
pressing the polymeric composite layer (4, 10) and the polymeric film (5) together,
wherein a decoration pattern is printed on the polymeric film,
wherein the polymeric film (5) is molten to the polymeric composite layer (4),
wherein at a contact area between the polymeric film and the polymeric composite layer an earlier melted portion of at least one of the polymeric film and the polymeric composite layer functions as glue, and
wherein the polymeric composite layer (4) is manufactured by melting a layer of granulate of polymeric composite and pressing the melted layer, wherein
the polymeric composite layer (4) is provided for placing the polymeric film (5) on its upper face before the upper face is cooled down below its melting temperature.

2. Method according to claim 1, wherein the polymeric film (5) is prepared by applying a surface tension treatment, preferably a corona discharge treatment,
then providing an ink pattern on the polymeric film (5),
then applying a surface tension treatment, preferably a corona discharge treatment, then applying a tie layer (6),
then applying an ionomer layer (7),
before or after placing the polymeric film (5) on the upper face of the polymeric composite layer (4).

3. Method according to claim 2, wherein a primer for promoting adhesion of olefinic resins is applied on the polymeric film (5) before providing the ink pattern and/or before applying the ionomer layer or the tie layer (6).

## Patentansprüche

1. Verfahren zur Herstellung eines Laminatpaneels, folgende Schritte beinhaltend:
Vorsehen einer Polymerverbundwerkstofflage (4, 10) mit einer Oberseite, die eine Temperatur über ihrer Schmelztemperatur hat,
Vorsehen einer Polymerfolie (5), die eine Dicke von weniger als 1500 µm aufweist, wobei die Polymerfolie aus einem Polymer hergestellt ist, das aus der Liste ausgewählt ist, die aus PVC, Polyethylen, XPS (Polystyrol), Polypropylen, Polyester und Polypropylen besteht,
Platzieren der Polymerfolie (5) auf der Oberseite der Polymerverbundwerkstofflage (4, 10), und
Zusammenpressen der Polymerverbundwerkstofflage (4, 10) und der Polymerfolie (5),
wobei ein Dekormuster auf die Polymerfolie gedruckt ist,
wobei die Polymerfolie (5) auf die Polymerverbundwerkstofflage (4) geschmolzen wird,
wobei an einem Kontaktbereich zwischen der Polymerfolie und der Polymerverbundwerkstofflage ein früher geschmolzener Teil von mindestens einem der Polymerfolie und der Polymerverbundwerkstofflage als Klebstoff fungiert, und
wobei die Polymerverbundwerkstofflage (4) durch Schmelzen einer Lage aus Granulat von Polymerverbundwerkstoff und Pressen der geschmolzenen Lage hergestellt wird, wobei die Polymerverbundwerkstofflage (4) vorgesehen wird, um die Polymerfolie (5) auf ihre Oberseite zu platzieren, bevor die Oberseite unter ihre Schmelztemperatur abgekühlt ist.

2. Verfahren nach Anspruch 1, wobei die Polymerfolie (5) vorbereitet wird durch Anwenden einer Oberflächenspannungsbehandlung, bevorzugt einer Koronaentladungsbehandlung,
dann Anbringen eines Tintenmusters auf der Polymerfolie (5),
dann Anwenden einer Oberflächenspannungsbehandlung, bevorzugt einer Koronaentladungsbehandlung,
dann Anbringen einer Verbindungsschicht (6),
dann Anbringen einer lonomerlage (7),
vor oder nach dem Platzieren der Polymerfolie (5) auf der Oberseite der Polymerverbundwerkstofflage (4).

3. Verfahren nach Anspruch 2, wobei ein Grundiermittel zur Förderung der Haftung von Olefinharzen auf der Polymerfolie (5) angebracht wird, bevor das Tintenmuster angebracht wird, und/oder bevor die lonomerlage oder die Verbindungsschicht (6) angebracht wird.

## Revendications

1. Procédé destiné à la fabrication d'un panneau stratifié, qui comprend les étapes dans lesquelles :
on procure une couche composite polymère (4, 10) qui possède une face supérieure dont la température est supérieure à sa température de mise en fusion ;
dans lequel le film polymère est constitué d'un polymère choisi parmi la liste constituée par le PVC, le polyéthylène, le XPS (polystyrène), le polypropylène, le polyester et le polypropylène ;
on place le film polymère (5) sur la face supérieure de la couche composite polymère (4, 10) ; et
on presse l'un contre l'autre la couche composite polymère (410) et le film polymère (5) ;
dans lequel un motif de décoration est imprimé sur le film polymère ;
dans lequel on joint par fusion le film polymère (5) à la couche composite polymère (4) ;
dans lequel, dans la zone de contact entre le film polymère et la couche composite polymère, une portion qui a été antérieurement portée à fusion d'au moins un élément choisi parmi le film polymère et la couche composite polymère agit à la manière d'une colle ; et
dans lequel la couche composite polymère (4) est réalisée par l'intermédiaire d'une mise en fusion d'une couche d'un produit de granulation d'un composite polymère et d'une compression de la couche à l'état fondu ;
dans lequel on procure la couche composite polymère (4) à des fins de placement du film polymère (5) sur sa face supérieure avant le refroidissement de la face supérieure en dessous de sa température de fusion.

2. Procédé selon la revendication 1, dans lequel on prépare le film polymère (5) par le fait que :
l'on applique un traitement de tension superficielle, de préférence un traitement de décharge par effet couronne ;
l'on procure ensuite un motif d'encre sur le film polymère (5) ;
l'on applique ensuite un traitement de tension superficielle, de préférence un traitement de décharge par effet couronne ;
l'on applique ensuite une couche de liaison (6) ;
l'on applique ensuite une couche ionomère (7), avant ou après le placement du film polymère (5) sur la surface supérieure de la couche composite polymère (4).

3. Procédé selon la revendication 2, dans lequel on applique un enduit dans le but de favoriser l'adhésion de résines oléfiniques sur le film polymère (5) avant de procurer le motif d'encre et/ou avant d'appliquer la couche ionomère ou la couche de liaison (6).
